(19) Europäisches Patentamt
European Patent Office
Office européen des brevets

(11) **EP 4 142 178 A1**

(12) **EUROPEAN PATENT APPLICATION**

(43) Date of publication:
**01.03.2023 Bulletin 2023/09**

(21) Application number: **21193578.8**

(22) Date of filing: **27.08.2021**

(51) International Patent Classification (IPC):
***H04B 7/185*** (2006.01)

(52) Cooperative Patent Classification (CPC):
**H04B 7/18517; H04B 7/18543**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **ST Engineering iDirect (Europe) Cy NV
9100 Sint-Niklaas (BE)**

(72) Inventors:
• **Reynders, Brecht
2800 Mechelen (BE)**
• **Delaruelle, Daniel
9100 Sint-Niklaas (BE)**
• **Breynaert, Dirk
9100 Sint-Niklaas (BE)**

(74) Representative: **DenK iP bv
Hundelgemsesteenweg 1116
9820 Merelbeke (BE)**

(54) **METHOD FOR TRANSMIT POWER MANAGEMENT ON A COMMUNICATION LINK**

(57) The present invention relates to a method for managing transmit power on a communication link between a transmitter and at least one receiver. The method comprises :
a) determining a distortion metric on a signal sent from the transmitter and received in one of said receivers,
b) determining an updated transmit power value for a next signal to be sent from said transmitter, thereby taking into account said distortion metric.

**Fig.5**

**Description**

**Field of the invention**

The present invention is generally related to the field of techniques for automatically controlling the transmit power in a digital communication system.

**Background of the invention**

Two-way communication services in general are considered, where there is a link from a hub or gateway or base station (shortly called a hub in the remainder of this description) to a terminal or user equipment (called a terminal in the remainder), called the forward (FWD) link, and a link from the terminal back to the hub, called the return (RTN) link. In case of multiple terminals per hub, this network is referred to as a star network; otherwise it is referred to as a point-to-point link. In the case of a point-to-point link, the hub can also be a low-cost or high-end terminal.

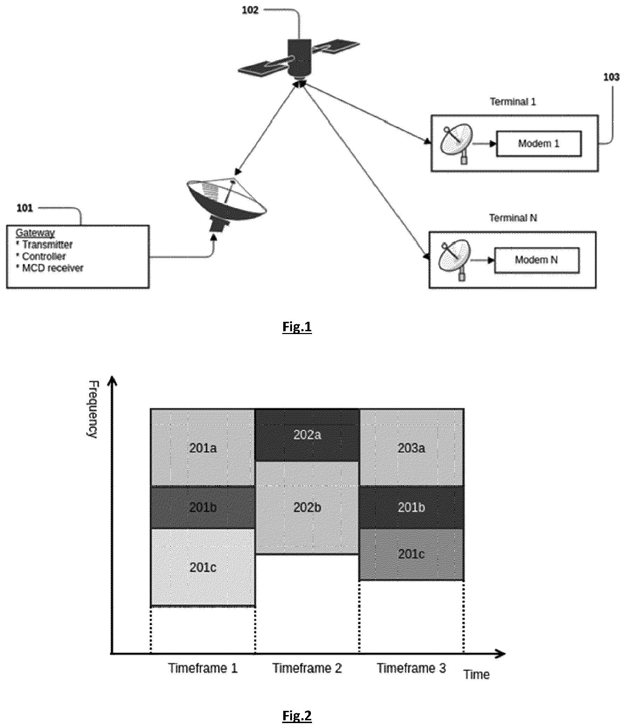

A typical satellite two-way star network is illustrated in Fig.1. A hub 101 communicates with a terminal 103 via a satellite 102. There are two main types of satellite: bent-pipe satellites and regenerative satellites. A bent-pipe or transparent satellite essentially operates as an amplifier forwarding the signal to increase coverage on earth. In such a system, multiple terminals may be covered through a single hub. A communication service may also contain several hubs. In the case of a regenerative satellite the signal is demodulated on-board the satellite. The hub receiver is then replaced by the (multi-carrier) demodulator(s) on-board the satellite. In the return link of such a star network where many terminal transmitters transmit to few hub receivers, the terminals share the communication link resources, meaning that the terminals must be organized to transmit orthogonal signals (i.e. signals not interfering in time or frequency or code). This is typically achieved by slaving all terminals to a common hub reference such as the network clock reference (NCR), which is a counter increasing at an internal clock rate synchronized with GPS time, cf. DVB-S2 Annex G.5.

In a star network, terminals in the same communication network can share the available return spectrum of that communication network in a multiple frequency time division multiple access (MF-TDMA) framework. Each terminal is assigned a portion of time and frequency spectrum for transmission. This is typically visualized through a time-frequency diagram in the time-frequency plane. This is visualized in Fig.2, where 201a-c denote transmissions occurring in timeframe 1, 202a-b transmissions in timeframe 2 and 203a-c transmissions in timeframe 3. Note that their bandwidths do not overlap and do not need to be identical in width.

The allocation of time and frequency slots, also referred to as resource allocation or scheduling, is performed in a central control unit. The central control unit is sometimes referred to as a controller or scheduler. The resource allocation is typically based on terminal capabilities (e.g. maximum power, maximum symbol rate), link quality (e.g. the signal-to-noise ratio or carrier-to-noise ratio (CN) associated with the carrier from each of the terminals, interference), terminal capacity requests (e.g. the payload size it wants to transmit over the next scheduling interval, e.g. the next 40 ms, where payload refers to data bits), total link capacity (total bandwidth available), service level agreements (some terminals may get priority over other terminals based on the contract with the service provider) and fairness (especially for the same priority class terminals). Indeed, the controller is arranged to manage the capacity so that a fair distribution of the available capacity can be obtained in congested cases where not all capacity requests can be fulfilled. There are numerous algorithms to perform this resource allocation in an efficient and performant way, see e.g. "Performance of fully variable demand assignment SS-TDMA system" (Maral and Bousquet, Oct.1987, Int'l Journal of Satellite Communications, pp.279-290).

In order to have flexibility in assigning resources to a given terminal, terminals can be assigned to a different amount of time slots and frequency bins over time. The rules to assign time and frequency resources to terminals and the waveform definition mapped to this multiple access channel can be proprietary or standardized. One example of such a standard is Digital Video Broadcasting - Return Channel via Satellite (DVB-RCS and its second version, DVB-RCS2).

A 'burst' is a continuous-time carrier (hence, without guard time in between) from a particular terminal in the return link (from terminal to hub, potentially via a satellite). A burst contains known symbols (a preamble, pilot symbols) for synchronization and identification purposes, and data symbols or information symbols. In order to have an efficient transmission, i.e., with less guard time and less overhead (as there is only one preamble in a burst), longer bursts are of interest. A long burst can contain multiple forward error correcting (FEC) words, potentially thousands of FEC words.

In a return link the hub (in case of communication without satellite or with a transparent satellite) or on-board (in the case of regenerative satellites) demodulators demodulate and decode all carriers from all terminals in a communication network. The device (or devices) demodulating and decoding these carriers is (are) referred to as a multi-carrier demodulator (MCD).

The overall efficiency of the return link can be expressed as the number of useful bits transmitted over a frame divided by the product of the time duration of that frame (including the guard time) and the frequency bandwidth available for that communication network in the return link:

$$efficiency = \frac{number\ of\ useful\ bits\ transmitted\ over\ a\ frame}{time\ duration\ of\ a\ frame * frequency\ bandwidth\ used}$$

Alternatively, one could say the efficiency is the division of the number of useful bits over the area covered by the burst in the time-frequency plane. The efficiency can be improved by having terminals transmitting at a higher power to achieve a higher signal-to-noise ratio. So, for systems where the efficiency of transmission is maximized, there is a need for maximizing the power. Note that sometimes the battery life of a terminal not connected to the electricity grid is maximized in which case no maximization of the terminal transmission power is pursued.

Cost-effective terminals have a high power amplifier (HPA) with a limited power. While approaching the maximal power output, non-linear distortion appears in the signal due to the non-linear amplification close to the amplifier's saturation point. This non-linear distortion occurs more frequently in case of wide carriers. In case of narrower carriers, other limitations may be more applicable such as power spectral density. The non-linear distortion has a bandwidth larger than the normal signal's bandwidth, typically three times the normal signal's bandwidth. While approaching the saturation power, the power spectral density (PSD) of this non-linear distortion increases, which can result in unwanted interference to adjacent carriers. There is thus a clear need to avoid causing excessive distortion when optimizing a terminal's transmit power.

Transmit power optimization is typically achieved by manually calibrating a terminal high power amplifier, e.g. via a spectrum analyser or via measurements on a signal specifically dedicated for this purpose, also called "out-of-band" signalling, as these measurements are not performed on data a terminal has to transmit. For performing calibration an expert is needed and/or spectrum analyzer and/or time, see e.g. US9413425B2. This is clearly a costly process, even though costs may be minimized during fabrication. For out-of-band signalling, the process uses costly bandwidth, see e.g. US8094606. In addition, the calibration can become outdated when replacing equipment, e.g. a cable replacement. That is why many firms carry out a daily line-up, which requires even more out-of-band signalling and which is also cumbersome. So, there is a need to have a simple and cost-effective (so, without human per-terminal intervention or expensive equipment and without using costly signal bandwidth) process to maximize a terminal's transmit power, while avoiding causing excessive distortion.

In addition, the distortion created while non-linearly amplifying a signal also interferes with the amplified signal itself. Depending on the modulation and coding used, a different non-linear distortion power can be allowed. By means of example, simplifying reality, QPSK modulations can deal with carrier-to-distortion ratios of around 18 dB while 64-APSK modulations can only deal with carrier-to-distortion ratios above 26 dB. The modulation and coding used, however, dynamically changes over time due to weather conditions and other phenomena. These changes require a transmit power adaptation such that the non-linear distortion power does not become dominant with respect to the thermal noise. In addition, a power calibration is typically made based on the highest modulation and coding, resulting in too much back-off for lower modulations and coding, losing dBs of power, significantly reducing the efficiency. So there is a clear need for a simple, automatic and cost-effective process to maximize a terminal's transmit power without causing excessive distortion to its own signal or frequency adjacent signals, dynamically taking into account the instantaneous modulation and coding used to generate the signal.

In DVB-RCS2 power control is defined in section 9.9.1 of ETSI EN 301 545-2 V1.2.1 (2014-04). The terminal can signal power headroom to the NCC. This headroom is based on a maximum power configured in the terminal. As mentioned above, this is done through an expert or via out-of-band signalling. There is no mention in the DVB-RCS2 standard or guideline on how to manage this in closed loop in cost-effective way, without causing excessive distortion to the signal or to a frequency adjacent signal, dynamically taking into account the instantaneous modulation and coding. Similarly, in section 9.8 of ETSI EN 301 545-2 V1.2.1 (2014-04), ACM is used to keep the link margin as small as possible. However, this link margin is only adapted by altering modulation and coding and does not mention the power being adjusted.

Section 6.4.8 ETSI EN 301 545-2 V1.2.1 (2014-04) mentions a way to control the transmit power of a terminal in sections 6.4.8 or 6.4.17.1. These sections, however, do not contain details on how the transmit power changes should be implemented. Power allocation algorithms in different sections, such as constant EIRP and constant power spectral density, are described but are out of scope of the current invention as they only try to keep the power constant irrespective of the distortion. In section 9.9.1 of the same document there is a warning about excessive distortion to the signal when changing from one modulation order to the next, and it does not mention either how to choose the maximal power without causing excessive distortion.

Prior art documents on uplink power control (i.e. towards the satellite), e.g. US8670373, typically disclose a closed loop method that modifies the transmit power in an attempt to keep the rate equal, e.g. in the presence of fading (or any other changes in link conditions that modify the link signal-to-noise ratio (SNR)) in the communication link. To overcome the changes in link conditions, more terminal transmit power is requested so that the link signal-to-noise ratio (SNR) is kept as constant as possible. Crucial in this method is again a maximum power indication, as configured in the terminal or in the system. The determination of this maximum power is not elaborated upon and typically happens, as mentioned before, through an expert or by means of expensive equipment or regularly repeated dedicate measurement campaigns.

Hence, there is a need to overcome or at least mitigate the above-mentioned limitations and drawbacks.

**Summary of the invention**

It is an object of embodiments of the present invention to provide for a method for managing the transmit power on a communication link

The above objective is accomplished by the solution according to the present invention.

In a first aspect the invention relates to a method for managing transmit power on a communication link between a transmitter and at least one receiver. The method comprises :

a) determining a distortion metric on a signal sent from the transmitter and received in at least one of the receivers,
b) determining an updated transmit power value for a next signal to be sent from said transmitter, thereby taking into account said distortion metric.

The proposed solution indeed allows for controlling the transmit power. A distortion metric is determined from a signal transmitted from the transmitter and received in at least one of the receivers. The distortion metric is calculated for example in the receiver where the signal was received or in the cloud. Next the distortion metric is conveyed to the transmitter so that it can be taken into account for determining an updated value of the transmit power for a next signal to be sent. Alternatively, the updated value of the transmit power may be directly conveyed to the transmitter after having been determined for example in the receiver.

In preferred embodiments the distortion metric is determined on a preamble comprised in a frame of the signal received in the at least one receiver. The preamble advantageously comprises known symbols in a same modulation order as payload data comprised in the frame.

The frame with the preamble is preferably transmitted only occasionally, for example with a given periodicity (e.g. every second) or based on the occurrence of some event (e.g. a configuration change, a change in the weather conditions, ...).

In some embodiments the distortion metric is a bit error rate or a modulation error rate.

In preferred embodiments the distortion metric is a carrier-to-distortion power ratio. In some embodiments the distortion power is a power of non-linear distortion resulting from non-linear amplification in the transmitter. In one embodiment the non-linear distortion power is measured by means of a detector assuming a predetermined amplifier non-linear characteristic.

In a preferred embodiment a higher transmit power value is selected for the next signal in step b) if the carrier-to-distortion ratio exceeds a carrier-to-noise ratio with a predetermined amount.

In one embodiment the method comprises a step of predicting an updated value of the distortion metric when an update of the transmit power value is determined in step b). For said predicting a model may be used of one or more high power amplifiers of the at least one transmitter and/or the at least one receiver.

In one embodiment the model is derived from observed distortion metrics.

Advantageously, the transmit power is an uplink transmit power of a terminal in a satellite communication network.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

**Brief description of the drawings**

The invention will now be described further, by way of example, with reference to the accompanying drawings, wherein like reference numerals refer to like elements in the various figures.

Fig.1 illustrates a typical satellite star network.
Fig.2 illustrates a time-frequency diagram.
Fig.3 illustrates an AM/AM curve and an AM/PM curve.
Fig.4 illustrates a carrier-to-distortion power ratio metric.
Fig.5 illustrates a 16-APSK constellation.

## Detailed description of illustrative embodiments

The present invention will be described with respect to particular embodiments and with reference to certain drawings but the invention is not limited thereto but only by the claims.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

It should be noted that the use of particular terminology when describing certain features or aspects of the invention should not be taken to imply that the terminology is being redefined herein to be restricted to include any specific characteristics of the features or aspects of the invention with which that terminology is associated.

In the description provided herein, numerous specific details are set forth. However, it is understood that embodiments of the invention may be practiced without these specific details. In other instances, well-known methods, structures and techniques have not been shown in detail in order not to obscure an understanding of this description.

Some definitions of terms employed in this description are first given.

A hub is a gateway between the access network of terminals, for example a satellite or wireless access network, and the core network (also known as the Internet). The hub side of the access network is typically more expensive with better equipment, such as more expensive power amplifiers having sufficient power to be operative in the linear region (resulting in less non-linear distortion) and better link quality with the satellite.

A terminal is the remote end of the satellite or wireless access network that typically aggregates a small number of user equipment, e.g. computers and smart phones.

A communication link is to be construed as a wireless link with a feedback channel. Typically both the wireless link and the feedback channel are wireless. In one embodiment the links are "over satellite", meaning that the satellite is part of the link between transmitter and receiver. In other embodiments the wireless link is a terrestrial link whereby a hub directly communicates with one or more terminals without a satellite in between. A digital communication system is considered comprising at least one transmitter and at least one receiver.

The term 'communication network' refers to all components combined, being hub, terminal, communication link and computers with the Internet. In some embodiments the communication network is a star network, whereas in other embodiments point-to-point connections are encountered.

In a digital communication system as considered in this invention, one can at the transmit side distinguish the processes of encoding and modulation, as is often the case in such systems. The information bits are first translated to a sequence of digital symbols (encoding) and subsequently the digital symbol sequence is translated to a continuous transmit waveform (modulation). The transmit waveform usually has a band-pass spectrum. It can then still be represented by an equivalent complex baseband transmit waveform having only low frequency components. The radio frequency waveform is obtained from the complex baseband waveform by quadrature modulation and possibly further frequency up-conversion. Before transmission over the air, the carrier waveform is amplified by the transmitter high power amplifier (HPA) to reach a configured or desired transmit power. Sometimes upconversion and amplification are combined in a single operation, e.g. by using frequency multiplier upconverters. The combination of upconversion and amplification is generally denoted block-up conversion (BUC). Possible non-linear characteristics of the high power amplification at the transmitter will be further elaborated on later in this description.

In so-called linear modulation schemes, the complex baseband waveform is obtained as the superposition of pulses of essentially finite duration, each pulse being the product of a complex-valued symbol with a delayed instance of a pulse known as the transmit filter impulse response. The finite set of complex-valued symbols is known as the constellation. A constellation is commonly represented as a set of M dots in a plane by interpreting the real and imaginary part of each of M symbol value as the abscissa and ordinate with respect to orthonormal axes. M is typically denoted as the modulation order. In a Phase Shift Keying (PSK) constellation all dots are located on a circle in the I-Q plane. In an Amplitude and Phase Shift Keying (APSK) constellation this restriction to a single circle is lifted. APSK in this sense includes double ring constellations as well as QAM constellations or any other form of constellation where amplitude and phase are in combination used to map data to symbols.

In some embodiments of the invention the digital communication system uses binary encoding. In that case the encoder in general does not directly map the message bits to symbols. Rather it maps the message bits to coded bits. Subsequently a group of code bits is used to designate a transmit symbol. The latter operation is commonly called bit mapping and the group of $\log_2 M$ code bits designating a transmit symbol from an M-ary constellation is called a bit label. This process is usually mirrored at the receiver side by bit demapping, followed by binary decoding, as explained further. An interleaver may further reorder code bits prior to mapping in order to improve overall system performance. A person skilled in the art of digital communications will readily understand that the encoder, interleaver and mapper may at different times employ different code rules, interleaving rules and constellations. The combination of a particular modulation (employing a constellation on which the coded bits are mapped) and coding (referring to the binary encoding) is denoted a modcod.

A person skilled in the art of digital communications readily understands that the used modcod may be varied. This technique is commonly known as adaptive coding and modulation (ACM). See for example ETSI EN 302 307 v1.2.1: Second generation framing structure, channel coding and modulation systems for Broadcasting, Interactive Services, News Gathering and other broadband satellite applications. The present invention is applicable to any digital communication system or scheme using ACM to transmit information all the time or only a fraction of the time. A person skilled in the art of digital communications readily understands that in addition a priori known symbols or partially a priori known symbols may be inserted for the purpose of assisting receiver synchronisation. When a priori known symbols are inserted before the symbols mapped from the coded bits, the a priori known symbols are referred to as a preamble. When a priori known symbols are inserted in between the symbols mapped from the coded bits, the a priori known symbols are referred to as pilot symbols.

At the receiver side the waveform is demodulated to obtain the receive values of the various symbols. The receive value of a symbol is not exactly equal to the transmit value, due to channel effects such as the addition of noise and distortion. The symbols are subsequently demapped. The demapper outputs for example likelihood ratios of the coded bits, which are next fed to the decoder. Like the encoder, the decoder can be composed of one or more concatenated decoders. In some embodiments one or more decoders can process the received information in an iterative manner and one or more decoders can also exchange information with the demapper in an iterative fashion. Both the demapper and the decoder may provide information regarding the quality of the received signal. In an embodiment this link quality is the signal-to-noise and distortion ratio measured with a state-of-art noise and distortion level estimator and here referred to as CND (where C denotes the carrier power or useful signal power, N thermal noise power and D distortion power). CND refers to the ratio of the average signal power vs the power of all impairments seen by the decoder. There are many link quality estimation algorithms available. These algorithms can be divided in two classes: algorithms using a priori knowledge of the transmitted symbols (so-called pilot symbols), also known as data-aided (DA) algorithms, and algorithms which do not use pilot symbols, also known as non-data-aided (NDA) algorithms. Amongst the NDA algorithms, an algorithm is further a decision-directed (DD) algorithm if it uses a detection or a decoding scheme in order to deliver a provisional (or tentative) symbol value that is used as a priori information.

The link quality estimation may be used by an adaptive coding and modulation unit to influence the selection of the current modcod, to increase the availability or the throughput of the communications link. In absence of channel impairments such as channel distortion and noise, the receive signal is equal to the transmit signal. In practice, however, non-linear amplification, more particularly amplification by the HPA at the transmitter, changes the phase and amplitude of the transmit signal and thus generates distortion.

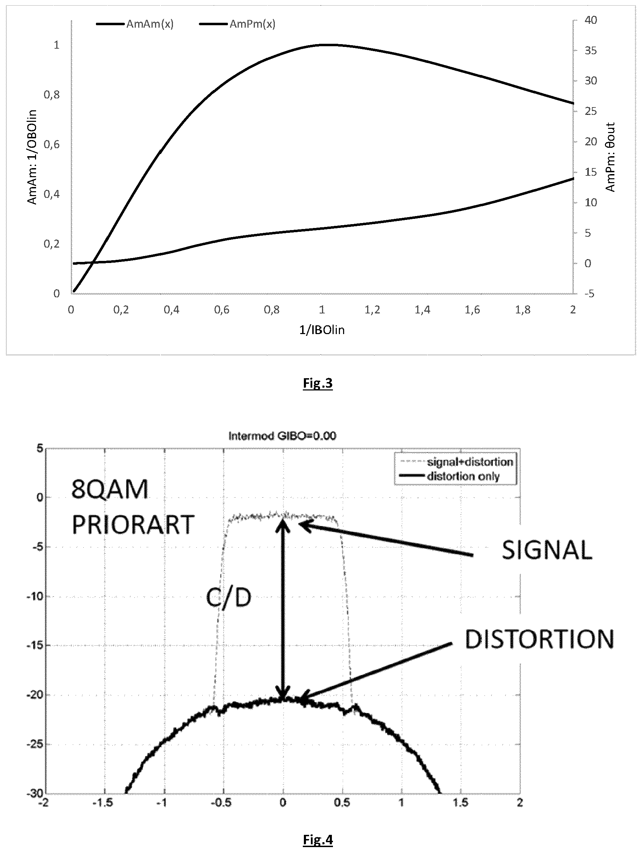

The non-linearities of the HPA can be modelled by an AM/AM and AM/PM curve, where AM and PM refer to the magnitude and phase of a complex signal, respectively. In case of a wideband HPA, the non-linearities might be modelled with multiple curves due to frequency sensitivity of the non-linearities. The AM/AM curve reflects the amplified signal magnitude versus the magnitude of the signal before amplification. The AM/PM curve returns the phase rotation the signal incurred during amplification in the HPA versus the signal magnitude before amplification. The absolute phase of the receive signal at a particular time instance thus equals the transmit signal phase at the corresponding time instance plus the phase rotation applied by the channel. The AM/AM and AM/PM curves are often normalized, such that the saturation point (i.e. the maximum) of the AM/AM curve is (1,1). The ordinate and abscissa of such normalized curves are then the inverses of the output backoff ($OBO_{lin}$) and input backoff ($IBO_{lin}$) of the amplifier, respectively, whereby the subscript *lin* refers to the fact that the values are shown in linear scale. An example of AM/AM and AM/PM curves is given in Fig.3. The normalized input amplitudes smaller than 1 are referred to be "before saturation", while the input amplitudes greater than 1 are referred to be beyond or after saturation. The right y-axis shows the phase rotation in degrees.

The distortion caused by the non-linear part of the amplifier is best illustrated by considering the symbol-level transmission link. The symbol-level transmission link includes the transmit pulse shaping filter (PSF) and the receive matched filter (MF) and is thus the channel seen between the transmit and receive I/Q symbols. The distortion caused by the symbol-level transmission link is illustrated by plotting the location of the received symbols of one source in the absence of channel noise, which is referred to as a scatter plot at the receiver side (in the following, simply called a "scatter plot"). The distortion mainly has two consequences:

(1) In a scatter plot each constellation point becomes a cluster, caused by intersymbol interference (ISI) due to the memory (caused by the filters, such as IMUX, OMUX, but also PSF and MF) in the channel, and
(2) constellation warping occurs, which causes the mass points of the clusters to be no longer on the original system constellation grid

A distortion metric is calculated on the signal coming in at a receiver. In a preferred embodiment this performance measure is the carrier-to-distortion power ratio (CD) calculated directly at the receiver. This computation is not necessarily executed in the receiver itself. In one embodiment this information can also be extracted using machine learning tools external to the receiver, such as neural networks in the cloud. The CD metric is visualized in Fig.4. Fig.4 additionally illustrates the spectral shape of distortion generated by the amplification of an 8-QAM constellation disclosed in US7254188.

The CD metric can be obtained in multiple ways. In one embodiment the noise power is measured in a silent moment, e.g., in between frames, and the power is measured on the preamble of a transmission. The data of the transmission provides CND, such that a CD estimation can be extracted as follows: CD = 1/(1/CND-N/C). In another embodiment the distortion can be directly extracted from the header and data using machine learning tools. Machine Learning-Based Characterization of SNR in Digital Satellite Communication Links (B. D'Huydevetters et al., March 2021, EuCAP 2021) provides an example on how to blindly estimate IBO from raw data using machine learning tools.

In other embodiments the distortion metric is based on the bit error ratio or the modulation error rate (MER) for a measured carrier-to-noise ratio (CN) value. The MER is defined as the ratio of the root mean square power of the error vector to the power of the reference. The error vector is the difference between the received symbol vector and the corresponding transmitted symbol vector (e.g. obtained after successful decoding). The reference is the predefined constellation used for demapping. When using the bit error ratio (BER), which could be the channel BER measured behind the demapper, a higher transmit power that does not result in a lower bit error ratio may serve as an indication of excessive distortion.

In some embodiments the distortion metric is conveyed to the transmitter for further use in the determination of the updated transmit power values for the next signal that will be transmitted. The distortion metric may come from the receiver that took care of the distortion metric computation or from the cloud. In some embodiments it is not the distortion metric that is conveyed to the transmitter, but rather directly the updated transmit power value itself.

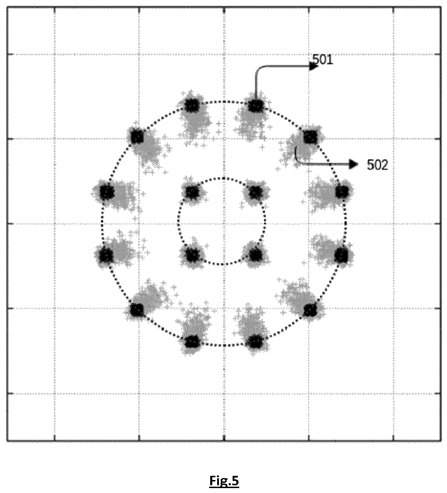

In general, the most advantageous constellations with a higher modulation order have a larger peak-to-average power ratio (PAPR) and require a higher carrier-to-distortion power to allow a smooth demodulation and decoding at the receiver side. For example, consider the 16-APSK constellation illustrated in Fig.5. In this figure the reference constellation is given by the big black dots 501. Clearly the outer ring with a higher peak power experiences more distortion than the inner ring as the grey received symbols 502 are further away from and less concentrated around the reference constellation 501.

The illustrated 16-APSK constellation has a PAPR of 1.1 dB. Combining this constellation with the DVB-S2 FEC with coding rate 2/3, the optimal gain input back-off over a linear clipped channel taking the frame error rate (FER) as metric is 1.75 dB. The higher the input power is for a given amplifier (in order to reach a desired output power), the closer an amplifier is driven to saturation, i.e., the lower the input back-off (IBO). The lower the input back-off, the more distortion is present in the amplified output signal, so the lower the CD. The illustrated 16-APSK constellation also shows it is hard to estimate the distortion metric for a modulation different from the one currently in use. In preferred embodiments of the invention therefore a known symbol sequence is sent in the same modulation as the payload to correctly measure the distortion experienced by that particular modulation.

The contribution of the distortion to the CND is negligible when the CD is much higher than the CN. Indeed, considering that CND = 1 / (N/C + D/C), it can be immediately seen that, for a CD that is 15 dB higher than the CN, the contribution from the CD only subtracts 0.135 dB from the CN to yield the CND. For example, if the CN is 15 dB and the CD is 30 dB, than the CND = 14.865 dB, or 0.135 dB lower than the CN. In general, a CD that is much higher than the CN or CND has a negligible effect on the performance.

Previously, ACM was already introduced, which uses the estimated link quality at the receiver to maintain availability (i.e., a more robust modcod is used in the case of decreasing link quality) or increase the throughput (i.e., a less robust but more efficient modcod). Another important process is denoted by automatic uplink power control (AUPC), which in this invention refers to a process to automatically update the terminal transmit power, based at least on estimated link quality metrics from a received signal. Using another terminology, AUPC is referred to as a power optimization function. Clearly, in one embodiment the carrier-to-distortion power ratio (CD) introduced above is an important input to this power optimization function. If the CD is for example much higher than the CN or CND, then the power optimization function can advise a higher transmit power, which may result in a higher carrier power C and therefore a higher CND at the receiver. In a particular embodiment a higher transmit power value can be assigned if the CD exceeds the CN by a margin of 15 dB. The reader skilled in the art recognizes a similar rule can be that the CD must be 15 dB higher than the CND, as the CN and CND are very close for such high CD. Similarly, margins smaller or larger than 15 dB can also apply, given the constraints of a particular use case.

In another embodiment, the MER or BER can be used to adapt the power. If the MER is still acceptable, being above a certain value, one could increase the power of transmitter increasing throughput and modulation. Similarly for the channel BER, if one stops noticing significant improvements on the channel bit error rate when increasing the power (even without packet loss), the power cannot be increased any further. The exact thresholds of these events depend on the modcods in use.

More robust modcods operate at much lower CND values, e.g. a CND of 0 dB. In that case the CD can be much lower, e.g. around 15 or 18 dB for a CND of 0 dB, which means the transmit amplifier can be driven much closer to saturation, even beyond saturation, in order to reach a high transmit power. More efficient modcods operate at a higher CND, e.g. at a CND of 15 dB. In that case the CD must be much higher, e.g. 30 dB, meaning that the transmit amplifier must back off sufficiently from saturation. In embodiments of the method presented in this invention the computation function that forms an input to adjusting the transmit power, takes the modcod used by a terminal into account.

In a preferred embodiment the distortion metric is computed on a preamble dedicatedly optimized for accurately estimating said distortion metric. Advantageously, the preamble is in the same modulation order as the data or payload. Indeed, as explained above, the PAPR of a waveform and thus the generated distortion, depends on the modulation order. By using a preamble with the same modulation order as the data, the estimated distortion metric on the preamble will be relevant for the actual distortion experienced on the payload. Also advantageously, the preamble is long enough to average out the effects of other impairments, such as thermal noise. Such a longer preamble, however, does not need to be sent every frame. For example, including this long preamble once per second leads to a sufficiently fast update of the distortion metric, while reducing the average return link waveform efficiency only in a negligible way. Depending on the use case (e.g. the amount of data transmitted by the terminal or the experienced CD by that terminal), the optimal frequency of including such a long preamble can vary.

More accurately than looking at the "present distortion metric", such as the present CD, one can actually predict which future CD will be observed given the newly assigned power calculated for a terminal.

To predict a future distortion metric, after updating the transmit power, a model of the HPA of a terminal can be assumed. In one embodiment, this model is the AMAM/AMPM model or multiple AMAM/AMPM models as discussed before. In another embodiment this can be a derived version of the AMAM/AMPM model such as the IBO to OBO characteristics. In yet another embodiment this model can even be an idealized power amplifier where only the saturation point is known and the remainder is derived from this point. In an embodiment wherein such a model is used, the transmit power is calculated at least partially based on a selected modcod and on channel conditions and then translated into predicted CD metrics and predicted CN metrics.

In networks with multiple terminals, however, it may be required to use a set of multiple HPA reference models to adequately represent each individual HPA in the network. From this set the most appropriate model for a terminal can be learned terminal per terminal based on the received metrics and the available HPA reference models, e.g., using a multi-armed bandit approach where an HPA model is selected at random with a probability distribution that depends on the difference between the predicted distortion and the measured distortion of previous selections. In yet another embodiment the actual HPA model can even be learned directly from the observed metrics.

The HPA characteristics typically depend on many variables including temperature and frequency. These variables may change over time and therefore cause an incorrect CD prediction. To avoid excessive errors in the prediction, in one embodiment only small transmit power variations can be considered. The smaller steps limit the prediction error as the mismatch can be taken into consideration in the next iteration.

The predicted CD is a more accurate metric than the current distortion metric as both the updated modcod and the updated transmit power are taken into account. The predicted CD can therefore reduce the margins needed on the CD as well. In one embodiment the predicted CD can be as low as the predicted CN + 12 dB. The predicted CN can incorporate the compression that occurs as a consequence of the non-linearity of the HPA, which originates from the AM/AM model of the HPA.

Using modcods with low decoding thresholds with corresponding low predicted CN values makes it possible to have low predicted CD values according to the method disclosed above, especially for single ring constellations such as QPSK and 8-PSK. However, for such low CD values, other effects may start playing a role, like influencing adjacent carriers (as the spectral regrowth from the distortion gets higher in power spectral density). Wide carriers with a corresponding higher power can then easily disturb small carriers, which can fall entirely in the generated distortion of the adjacent signal. Therefore, it is preferred to lower bound the allowed predicted CD of these modulation schemes. In one embodiment this could be down to 18 dB.

Due to the sensitivity of multi-ring constellations such as 16-APSK to distortion, as illustrated above, one embodiment puts an additional lower bound on the allowed predicted CD value. This limitation puts an upper bound on the total observed distortion and this prevents multi-ring constellations from deteriorating beyond recoverable. 8-PSK constellations with efficient codes (i.e., high coding rates) have higher thresholds than the 16-APSK with strong codes (i.e., low coding rates), yet these 16-APSK constellations are more sensitive to distortion than the 8-PSK constellations. In one embodiment, this lower bound on the predicted CD for 16-APSK is put to 21 dB. In one embodiment this may lead to the following equation:

$$\text{Allowed predicted CD} = \min \left( 21 \text{ dB}, \ \text{predicted CN} + 12 \text{ dB} \right)$$

While the invention has been illustrated and described in detail in the drawings and foregoing description, such illustration and description are to be considered illustrative or exemplary and not restrictive. The foregoing description details certain embodiments of the invention. It will be appreciated, however, that no matter how detailed the foregoing appears in text, the invention may be practiced in many ways. The invention is not limited to the disclosed embodiments.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

**Claims**

1. Method for managing transmit power on a communication link between a transmitter and at least one receiver, the method comprising :

   a) determining a distortion metric on a signal sent from said transmitter and received in one of said receivers,
   b) determining an updated transmit power value for a next signal to be sent from said transmitter, thereby taking into account said distortion metric.

2. Method for managing transmit power as in claim 1, wherein said distortion metric is determined on a preamble comprised in a frame of said signal received in said one receiver.

3. Method for managing transmit power as in claim 2, wherein said preamble comprises known symbols in a same modulation order as payload data comprised in said frame.

4. Method for managing transmit power as in claim 2 or 3, wherein said frame with said preamble is transmitted periodically or event-based.

5. Method for managing transmit power as in any of the previous claims, wherein said distortion metric is a bit error rate or a modulation error rate.

6. Method for managing transmit power as in any of claims 1 to 4, wherein said distortion metric is a carrier-to-distortion power ratio.

7. Method for managing transmit power as in claim 6, wherein said distortion power is a power of non-linear distortion resulting from non-linear amplification in said transmitter.

8. Method for managing transmit power as in claim 7, wherein said non-linear distortion power is measured by means of a detector assuming a predetermined amplifier non-linear characteristic.

9. Method for managing transmit power as in any of claims 6 to 8, wherein in step b) a higher transmit power value is selected for said next signal if said carrier-to-distortion ratio exceeds a carrier-to-noise ratio with a predetermined amount.

10. Method for managing transmit power as in any of the previous claims, comprising a step of predicting an updated value of said distortion metric when an update of the transmit power value is determined in step b).

11. Method for managing transmit power as in claim 10, wherein for said predicting a model is used of one or more high power amplifiers of said transmitter and/or said at least one receiver.

12. Method for managing transmit power as in claim 11, wherein said model is derived from observed distortion metrics.

13. Method for managing transmit power as in any of the previous claims, wherein said transmit power is an uplink transmit power of a terminal in a satellite communication network.

**Fig.1**

**Fig.2**

**Fig.3**

**Fig.4**

**Fig.5**

Europäisches
Patentamt

European
Patent Office

Office européen
des brevets

# EUROPEAN SEARCH REPORT

Application Number

EP 21 19 3578

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 190 720 A1 (GLOBAL EAGLE ENTERTAINMENT INC [US]) 12 July 2017 (2017-07-12) * paragraphs [0001] – [0007], [0010] – [0025], [0027] – [0047], [0054] – [0057], [0063] – [0073]; figures 1-18 * | 1-13 | INV. H04B7/185 |
| X | US 2021/044311 A1 (ROUSSET OLIVIER [FR] ET AL) 11 February 2021 (2021-02-11) * paragraphs [0048] – [0085]; figures 1,2 * * paragraphs [0091] – [0119]; figures 4,5 * * paragraphs [0125] – [0140]; figures 6,7 * * abstract * | 1-13 | |

TECHNICAL FIELDS
SEARCHED      (IPC)

H04B

The present search report has been drawn up for all claims

| Place of search | Date of completion of the search | Examiner |
|---|---|---|
| The Hague | 4 February 2022 | Nilsson, Martin |

EPO FORM 1503 03.82 (P04C01)

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

## ANNEX TO THE EUROPEAN SEARCH REPORT
## ON EUROPEAN PATENT APPLICATION NO.

EP 21 19 3578

This annex lists the patent family members relating to the patent documents cited in the above-mentioned European search report.
The members are as contained in the European Patent Office EDP file on
The European Patent Office is in no way liable for these particulars which are merely given for the purpose of information.

04-02-2022

| Patent document cited in search report | | | Publication date | Patent family member(s) | | | Publication date |
|---|---|---|---|---|---|---|---|
| EP 3190720 | A1 | | 12-07-2017 | EP | 3190720 | A1 | 12-07-2017 |
| | | | | ES | 2726039 | T3 | 01-10-2019 |
| | | | | US | 2017201315 | A1 | 13-07-2017 |
| US 2021044311 | A1 | | 11-02-2021 | EP | 3759837 | A1 | 06-01-2021 |
| | | | | FR | 3078600 | A1 | 06-09-2019 |
| | | | | US | 2021044311 | A1 | 11-02-2021 |
| | | | | WO | 2019166168 | A1 | 06-09-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9413425 B2
- US 8094606 B
- US 8670373 B
- US 7254188 B

**Non-patent literature cited in the description**

- **MARAL ; BOUSQUET.** Performance of fully variable demand assignment SS-TDMA system. *Int'l Journal of Satellite Communications,* October 1987, 279-290
- *ETSI EN 301 545-2 V1.2.1,* April 2014
- Second generation framing structure, channel coding and modulation systems for Broadcasting, Interactive Services, News Gathering and other broadband satellite applications. *ETSI EN 302 307 v1.2.1*
- **B. D'HUYDEVETTERS et al.** Machine Learning-Based Characterization of SNR in Digital Satellite Communication Links. *EuCAP 2021,* March 2021